# EUROPÄISCHE PATENTSCHRIFT

(11) **EP 1 105 667 B1**
(45) Veröffentlichungstag und Bekanntmachung des Hinweises auf die Patenterteilung: **16.04.2003**
(21) Anmeldenummer: 99945971.2
(22) Anmeldetag: 12.08.1999
(51) Int. Cl.: F16K 27/04

(54) **VENTILSCHIEBER**
VALVE SLIDE
TIROIR DE SOUPAPE

(30) Priorität: 19.08.1998 DE 19837558
(43) Veröffentlichungstag der Anmeldung: 13.06.2001
(73) Patentinhaber: ROBERT BOSCH GMBH, 70442 Stuttgart (DE)
(72) Erfinder: WITOWSKI, Edgar, D-71277 Rutesheim (DE); WIDERA, Joerg, D-70839 Gerlingen (DE)
(74) Vertreter: Maiwald Patentanwalts GmbH
(86) Internationale Anmeldenummer: EP9905866
(87) Internationale Veröffentlichungsnummer: WO00011385

(56) Entgegenhaltungen:
- DE-A- 4 137 805
- US-A- 3 587 156
- US-A- 3 989 058
- US-A- 5 064 168
- US-A- 5 248 126
- US-A- 5 293 685

## Beschreibung

### Stand der Technik

Die Erfindung geht aus von einem Ventilschieber entsprechend der Gattung des Anspruchs 1. Ventilschieber werden in Schieberbohrungen von Wegeventilen eingebaut, um, betätigbar von außen, verschiedene Schaltstellungen des Wegeventils zu ermöglichen. In den veschiedenen Schaltstellungen sind Druckmittelverbindungen zwischen benachbarten Druckkammern des Wegeventils freigegeben bzw. gesperrt. Die Ventilschieber wirken hierzu mit Dichtelementen zusammen, die entweder ortsfest am Gehäuse des Wegeventils angeordnet sind, oder die am Ventilschieber festgelegt und somit gemeinsam mit diesem relativ zum Gehäuse verschiebbar sind.

Der Gattung des Anspruchs 1 entsprechend, wird von Ventilschiebern mit daran angeordneten Dichtelementen ausgegangen. Ein derartiger Ventilschieber ist beispielsweise aus der DE 41 37 805 A1 bereits bekannt. Dieser bekannte Ventilschieber ist aus Kostengründen aus einem massiven, metallischen Schieberkern und daran angespritzten bzw. aufvulkanisierten Steuerabschnitten aufgebaut. Der Ventilschieber ist dadurch relativ biegesteif. Die eingespritzten Dichtelemente weisen jedoch nachteiligerweise einen relativ flachen Querschnitt auf und sind deshalb verhältnismäßig starr und unflexibel. Dies verursacht eine hohe Reibung bzw. erlaubt nur geringe Pressungen. Des weiteren lassen sich nur kleine Form- und Lagetoleranzschwankungen der Schieberbohrung zuverlässig abdichten. Im Extremfall ist deshalb eine aufwendige und teuere spanende Feinbearbeitung der Schieberbohrung erforderlich.

Um diesen Nachteil zu vermeiden wird in der US 3,587,156 ein Ventilschieber vorgeschlagen, dessen Kolbenabschnitte und Dichtelemente als einteiliges Bauteil ausgeführt sind. Der einteilige Ventilschieber ist aus einem Kunststoff gefertigt, der elastisch verformbare Dichtungseigenschaften besitzt und insoweit über eine hohe Formelastizität verfügt. Nachteilig bei diesem bekannten Ventilschieber ist allerdings, dass dieser sich aufgrund seiner elastischen Eigenschaften bei anstehendem Druck zwischen den Dichtelementen in axialer Richtung dehnt, wobei die axiale Funktion des Ventils ab einem bestimmten Druckniveau nicht mehr einwandfrei sichergestellt ist.

Es ist daher die Aufgabe der vorliegenden Erfindung, den gattungsgemäßen Ventilschieber derart weiterzubilden, dass eine axiale Ausdehnung vermieden wird, ohne dabei aber die beabsichtigte Elastizität in radialer Richtung zu beeinträchtigen.

Die Aufgabe wird ausgehend von einem Ventilschieber gemäß dem Oberbegriff von Anspruch 1 in Verbindung mit dessen kennzeichnenden Merkmalen gelöst. Vorteilhafte Weiterbildungen der Erfindung sind in den nachfolgenden abhängigen Ansprüchen angegeben.

Die Erfindung schließt die technische Lehre ein, dass der Ventilschieber zusätzlich mit einem Element aus biegsamem, zugfestem Material ausgestattet ist, welches parallel zur Längsachse des Ventilschiebers verläuft und zumindest umfangsseitig vom Dichtungsmaterial des Ventilschiebers umspritzt ist.

Der erfindungsgemäße Ventilschieber weist den Vorteil auf, dass er bei einer kostengünstigen Herstellung eine hohe Flexibilität besitzt, die konstante Pressungsverhältnisse an den Dichtelementen schafft. Die Reibungskräfte bei der Betätigung des Ventilschiebers sind relativ gering; der Ventilschieber passt sich an Unebenheiten und Unrundheiten der Schieberbohrung an. Letztere kann daher preisgünstig, da relativ grob toleriert, hergestellt werden. Der Ventilschieber ist aus einem Kunststoff mit guten Dichtungseigenschaften gefertigt; die Dichtelemente sind angeformt. Dies spart Montagekosten ein und schließt Leckagen, wie sie am Innendurchmesser herkömmlicher, separater Ringdichtungen möglich sind, aus. Weitere Vorteile oder vorteilhafte Weiterbildungen der Erfindung ergeben sich aus den abhängigen Ansprüchen und der Beschreibung.

### Zeichnung

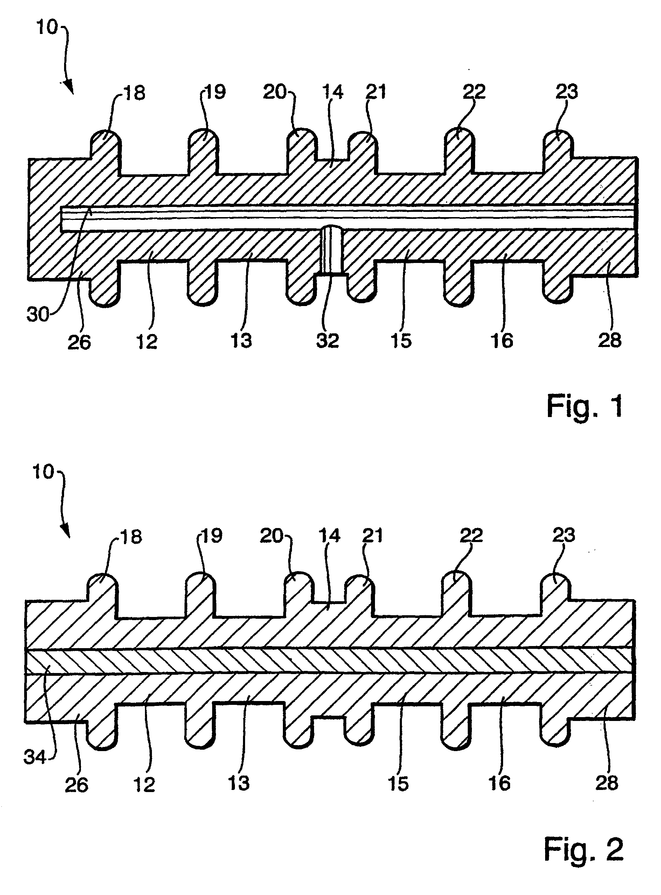

Ein Ausführungsbeispiel der Erfindung ist in der Zeichnung dargestellt und in der nachfolgenden Beschreibung näher erläutert. Die Figuren 1 und 2 zeigen Ventilschieber im Längsschnitt, wobei der Ventilschieber in Figur 1 als Hohlschieber ohne das erfindungswesentliche zugfeste Element ausgebildet und in Figur 2 entsprechend der Erfindung mit einem zugfesten Element versehen ist.

### Beschreibung der Ausführungsbeispiele

Bei dem in der Figur 1 dargestellten Ventilschieber 10 handelt es sich um ein einteiliges Bauelement mit rotationssymmetrischem Querschnitt. Der Ventilschieber 10 ist aus mehreren, zueinander konzentrisch angeordneten Kolbenabschnitten 12 bis 16 aufgebaut, die in axialer Richtung hintereinander liegen. An ihren Enden sind die Kolbenabschnitte 12 bis 16 mit umfangseitig verlaufenden und einstückig angeformten Dichtelementen 18 bis 23 versehen, die den Ventilschieber 10 radial überragen.

Die beiden Endabschnitte 26 und 28 des Ventilschiebers 10 haben im Vergleich zu den Kolbenabschnitten 12, 13 und 15, 16 einen größeren Außendurchmesser, um unter Betriebsbedingungen in einem Wegeventil als druckbeaufschlagbare Antriebs- bzw. Rückstellkolben für den Ventilschieber 10 zu wirken. Der mittlere, den Zulauf des Wegeventils steuernde, Kolbenabschnitt 14 ist im Außendurchmesser ebenfalls verdickt ausgeführt, um zwecks verlustfreier Druckübertragung eine möglichst kleine zulaufseitige Druckkammer im Wegeventil zu gewährleisten.

In seiner Längsrichtung hat der Ventilschieber 10 exemplarisch eine zentrische Ausnehmung 30. Diese Ausnehmung 30 hat vorzugsweise einen kreisförmigen Querschnitt und kann mit Hilfe eines Radialkanals 32 im Kolbenabschnitt 14 druckbeaufschlagt werden. Dadurch lassen sich die Pressungen und damit die Reibungsverhältnisse der Dichtelemente 18 bis 23 beeinflussen. Die Ausnehmung 30 ist im Ausführungsbeispiel als Sackloch ausgeführt, das zur Seite des Arbeitskolbens 26 hin verschlossen ist. Dadurch kann im Betrieb der Ventilschieber 10 über die Druckbeaufschlagung der Ausnehmung 30 bei gleichzeitiger Entlastung des einen druckbeaufschlagten Endabschnitts 26, 28 zurückgestellt werden. In diesem Fall kann auf eine Rückstellfeder verzichtet werden.

Ein derartig aufgebauter Ventilschieber 10 ist insbesondere für einen spritzgießtechnischen Herstellungsprozeß geeignet. Dabei lassen sich ohne nennenswerte Zusatzkosten verschiedene Außen- und Innenkonturen montagefertig herstellen.

Der Ventilschieber 10 besteht aus einem elastischen Kunststoffmaterial mit guten Dichtungseigenschaften, beispielsweise Polyurethan, und weist daher eine hohe Formflexibilität auf. Dadurch paßt sich der Ventilschieber 10 den Toleranzen der ihm zugeordneten Schieberbohrung an, ohne daß sich die Pressungs- oder Reibungsverhältnisse an seinen Dichtelementen 18 bis 23 wesentlich ändern. Letztere sind am Ventilschieber 10 angeformt und erfordern daher keinen Montageaufwand. Zudem treten keine Leckagen an der Übergangsstelle von den Kolbenabschnitten 12 bis 16 zu den Dichtelementen 18 bis 23 auf.

Figur 2 zeigt den Ventilschieber 10 in der erfindungsgemäßen Ausbildung. Diese beruht auf der Überlegung, daß der Ventilschieber 10 sich bei anstehendem Druck zwischen den Dichtelementen 18 bis 23 in axialer Richtung derart ausdehnt, daß die Dichtelemente 18 bis 23 nicht mehr bestimmungsgemäß mit der Dichtgeometrie im zugeordneten Ventilgehäuse (nicht gezeichnet) zusammenwirken. Um deshalb eine axiale Ausdehnung des Ventilschiebers 10 zu vermeiden, ohne dessen erfindungsgemäß beabsichtigte Elastizität in radialer Richtung zu beeinträchtigen, weist der Ventilschieber 10 ein biegsames aber zugfestes Element 34 auf. Dieses kann aus einer einzelnen Litze oder einem Bündel von Litzen bestehen, wobei diese Litzen aus Metall oder aus Kunststoff, insbesondere aus fasergefülltem Kunststoff bestehen und gegebenenfalls auch miteinander verflochten sein können.

Ein derartiges zugfestes Element 34 wird bei der Herstellung des Ventilschiebers 10 in das Spritzgußwerkzeug eingelegt und anschließend vom elastischen Dichtungsmaterial des Ventilschiebers 10 umspritzt. Vorzugsweise ist das zugfeste Element 34 zentrisch im Ventilschieber 10 angeordnet; exzentrische Anordnungen wären jedoch ebenso denkbar, wie die Anordnung mehrerer über den Querschnitt symmetrisch verteilter Elemente 34. Die Elemente 34 können allseitig vom Dichtungsmaterial umschlossen sein, können aber alternativ auch an den Stirnflächen des Ventilschiebers 10 frei liegen. Wird beispielsweise ein einzelner Draht als zugfestes Element 34 verwendet, so ist darauf zu achten, daß die umspritzte Oberfläche dieses Drahts eine zuverlässige Verbindung mit dem Dichtungsmaterial des Ventilschiebers 10 ermöglicht. Dies kann durch eine geeignete Oberflächenrauhigkeit oder durch eine speziell strukturierte Oberfläche erreicht werden.

Über die Darstellung in Figur 2 hinausgehend ist es durchaus denkbar, Ventilschieber 10, die als druckbeaufschlagte Hohlkörper gemäß Figur 1 ausgebildet sind, ebenfalls mit zugefesten Elementen 34 auszustatten.

Selbstverständlich sind Änderungen oder Ergänzungen an den beschriebenen Ausführungsbeispielen möglich, ohne vom Grundgedanken der Erfindung abzuweichen.

So ist es beispielsweise möglich, die Formflexibilität des Ventilschiebers 10 durch eine spezielle Außenkontur bzw. Innenkontur der Ausnehmung 30 im Gesamten oder partiell, d.h. an ausgewählten Stellen des Ventilschiebers 10, zu beeinflussen. Dies wäre allein oder in Kombination mit einer entsprechenden Stoffwahl für den Ventilschieber 10 und über eine veränderliche Druckbeaufschlagung der Ausnehmung 30 durchführbar. Des weiteren könnte die Druckbeaufschlagung der Ausnehmung 30, statt wie beschrieben mit Hilfe des Radialkanals 32, auch durch eine im Gehäuse eines Wegeventils ausgebildete Druckleitung erfolgen, die in die Öffnung der sacklochartigen Ausnehmung 30 einmündet. Diese Ausnehmung 30 muß nicht zwangsweise als Sacklochbohrung ausgeführt sein, sondern kann auch durchgängig ausgebildet sein. Zur Rückstellung müsste in diesem Fall allerdings eine zusätzliche Rückstellfeder vorgesehen werden. Auch eine exzentrische Anordnung der Ausnehmung 30 wäre denkbar. Erfindungsgemäße Ventilschieber 10 sind vorzugsweise für pneumatische Wegeventile vorgesehen, ohne jedoch auf diese Anwendungsmöglichkeit eingeschränkt zu sein.

## Patentansprüche

1. Ventilschieber (10), insbesondere zur Steuerung von Druckmittelverbindungen zwischen Druckkammern in Wegeventilen, mit wenigstens zwei koaxial hintereinander angeordneten Kolbenabschnitten (12 bis 16) und mit umfangsseitig an den Kolbenabschnitten (12 bis 16) festgelegten Dichtelementen (18 bis 23) zur Abdichtung bzw. zur seitlichen Begrenzung von Druckkammern, wobei die Kolbenabschnitte (12 bis 16) und die Dichtelemente (18 bis 23) als einteiliges Bauelement ausgeführt sind, das für eine hohe Formelastizität aus elastisch verformbaren, Dichtungseigenschaften aufweisenden Kunststoff besteht,
**dadurch gekennzeichnet, dass** der Ventilschieber (10) zusätzlich mit wenigstens einem Element (34) aus biegsamem, zugfestem Material ausgestattet ist, welches parallel zu dessen Längsachse verläuft und zumindest umfangsseitig von Dichtungsmaterial des Ventilschiebers (10) umspritzt ist.

2. Ventilschieber nach Anspruch 1, **dadurch gekennzeichnet, daß** der Ventilschieber (10) als Hohlschieber mit einer in Achsrichtung verlaufenden Ausnehmung (30) ausgebildet ist.

3. Ventilschieber nach Anspruch 2, **dadurch gekennzeichnet, daß** die Ausnehmung (30) zentrisch angeordnet ist und wenigstens an einem Ende des Ventilschiebers (10) sacklochartig verschlossen ist.

4. Ventilschieber nach einem der Ansprüche 2 oder 3, **dadurch gekennzeichnet, daß** die Ausnehmung (30) einen im wesentlichen kreisförmigen Querschnitt mit in Achsrichtung veränderlichem Innendurchmesser aufweist.

5. Ventilschieber nach einem der Ansprüche 2 bis 4, **dadurch gekennzeichnet, daß** die Ausnehmung (30) mit Hilfe eines in diese einmündenden Druckmittelkanals (32) druckbeaufschlagbar ist und daß dieser Druckmittel kanal (32) mit dem Zulauf des Wegeventils verbunden ist.

6. Ventilschieber nach einem der Ansprüche 1 bis 5, **dadurch gekennzeichnet, daß** koaxial an wenigstens einem der Enden des Ventilschiebers (10) ein einteilig angeformter Stellkolben vorgesehen ist.

7. Ventilschieber nach einem der Ansprüche 1 bis 6, **dadurch gekennzeichnet, daß** der Ventilschieber (10) spritzgußtechnisch hergestellt ist.

8. Ventilschieber nach einem der Ansprüche 1 bis 7, **dadurch gekennzeichnet, daß** das zugfeste Element (34) als Litze aus Metall oder Kunststoff, insbesondere aus faserverstärktem Kunststoff, oder als Bündel solcher Litzen ausgebildet ist.

9. Ventilschieber nach einem der Ansprüche 1 oder 8, **dadurch gekennzeichnet, daß** das zugfeste Element (34) konzentrisch zur Längsachse des Ventilschiebers (10) angeordnet ist.

## Claims

1. Valve slider (10), in particular for controlling pressure means connections between pressure chambers in directional valves, comprising
at least two piston portions (12 to 16) which are coaxially arranged one after another, and
sealing elements (18 to 23) which are fixedly arranged at a peripheral side at the piston portions (12 to 16) for sealing or laterally limiting pressure chambers, wherein
the piston portions (12 to 16) and the sealing elements (18 to 23) are manufactured as integrally formed component, which is made of elastically deformable plastics having sealing characteristics for a high elasticity of shape,
**characterized in that** the valve slider (10) is further provided with at least one element (34) which is made of a flexible tensile strength guaranteeing material, which extends parallel to its longitudinal axis and which is at least circumferentially extrusion-coated by sealing material of the valve slider (10).

2. Valve slider according to claim 1,
**characterized in that** the valve slider (10) is formed as a hollow slider having a recess (30) which extends in axial direction.

3. Valve slider according to claim 2,
**characterized in that** the recess (30) is centrically arranged and closed in a blind hole manner at at least one end of the valve slider (10).

4. Valve slider according to one of claims 2 or 3,
**characterized in that** the recess (30) has a substantially circular cross section with an inner diameter which varies in axial direction.

5. Valve slider according to one of claims 2 to 4,
**characterized in that** the recess (30) may be pressurized by means of a pressure means channel (32) discharging into the recess and that this pressure means channel (32) is connected to the supply connection of the directional valve.

6. Valve slider according to one of claims 1 to 5,
**characterized in that** at least at one end of the valve slider (10) an integrally formed control piston is coaxially provided.

7. Valve slider according to one of claims 1 to 6,
**characterized in that** the valve slider (10) is manufactured by injection moulding.

8. Valve slider according to one of claims 1 to 7,
**characterized in that** the tensile strength guaranteeing element (34) is made as a strand of metal or plastics, in particular of fibre-reinforced plastics, or as a bundle comprising such strands.

9. Valve slider according to one of claims 1 or 8,
**characterized in that** the tensile strength guaranteeing element (34) is arranged concentrically to the longitudinal axis of the valve slider (10).

## Revendications

1. Tiroir de valve (10), en particulier pour commander des liaisons de liquide hydraulique entre des chambres de pression dans des distributeurs, comportant au moins deux sections de pistons (12 à 16) disposées de manière coaxiale l'une après l'autre et avec des éléments d'étanchéisation (18 à 23) fixés côté périphérie des sections de piston (12 à 16) pour étanchéiser ou délimiter latéralement des chambres de pression, les sections de piston (12 à 16) et les éléments d'étanchéisation (18 à 23) étant réalisés en tant qu'élément monobloc qui, pour une grande souplesse de forme, est constitué de matière plastique déformable présentant des propriétés d'étanchéisation,
**caractérisé en ce que** le tiroir de valve (10) est équipé en outre d'au moins un élément 34 de matériau pliable et résistant à la traction, s'étendant parallèlement à son axe longitudinal et couvert par injection au moins sur son côté périphérique du matériau d'étanchéisation du tiroir de valve (19).

2. Tiroir de valve selon la revendication 1,
**caractérisé en ce que** le tiroir de valve (10) est constitué en tant que tiroir creux comportant un creux (30) s'étendant dans le sens axial.

3. Tiroir de valve selon la revendication 2,
**caractérisé en ce que** le creux (30) est disposé de manière centrée et fermé en une extrémité au moins du tiroir de valve (10) comme un trou borgne.

4. Tiroir de valve selon l'une des revendications 2 ou 3,
**caractérisé en ce que** le creux (30) présente une section essentiellement circulaire avec un diamètre intérieur variable dans le sens de l'axe.

5. Tiroir de valve selon l'une des revendications 2 à 4,
**caractérisé en ce que** le creux (30), à l'aide d'un canal de liquide hydraulique (32) y débouchant peut être soumis à la pression et que ce canal de liquide hydraulique (32) est relié à l'arrivée du distributeur.

6. Tiroir de valve selon l'une des revendications 1 à 5,
**caractérisé en ce que**, de manière coaxiale, en une extrémité au moins du tiroir de valve (10), un piston de positionnement monobloc rapporté par formage est prévu.

7. Tiroir de valve selon l'une des revendications 1 à 6,
**caractérisé en ce que** le tiroir de valve (10) est réalisé par une technique du moulage par injection.

8. Tiroir de valve selon l'une des revendications 1 à 7,
**caractérisé en ce que** l'élément résistant à la traction (34) est réalisé en tant que fil de métal ou de matière plastique, en particulier de matière plastique renforcée de fibres ou en tant que faisceau de tels fils.

9. Tiroir de valve selon l'une des revendications 1 à 8,
**caractérisé en ce que** l'élément résistant à la traction (34) est disposé de manière concentrique à l'axe longitudinal du tiroir de valve (10).
